# EUROPEAN PATENT APPLICATION

(11) **EP 1 136 291 A1**
(43) Date of publication of application: **26.09.2001**
(21) Application number: 00105930.2
(22) Date of filing: 23.03.2000
(51) Int. Cl.: B60J 5/06

(54) **Sliding vertical steering column for the support and the blockage of the side-doors for all the height in vans and containers with all-opening sides**

(71) Applicant: T.M.T. Costruzioni srl, 63037 Porto D'Ascoli (AP) (IT)
(72) Inventor: Villa Tomaso, 47034 Forlimpopoli (FO) (IT)

(57) **Abstract**

A door system for gaining access along the full length of a van or container without any obstructions.

The side walls of the van consist of panels hinged to moveable support posts. The support posts are slidingly attached to rails at top and bottom of the loading area via runners. The runners that secure the posts are kept perpendicular to the rails are also intended to reinforce the structure when the doors are closed in transport mode.

To open the side wall, the doors are swung open to 90 degrees and then the posts are moved to each end of the loading area.

## Description

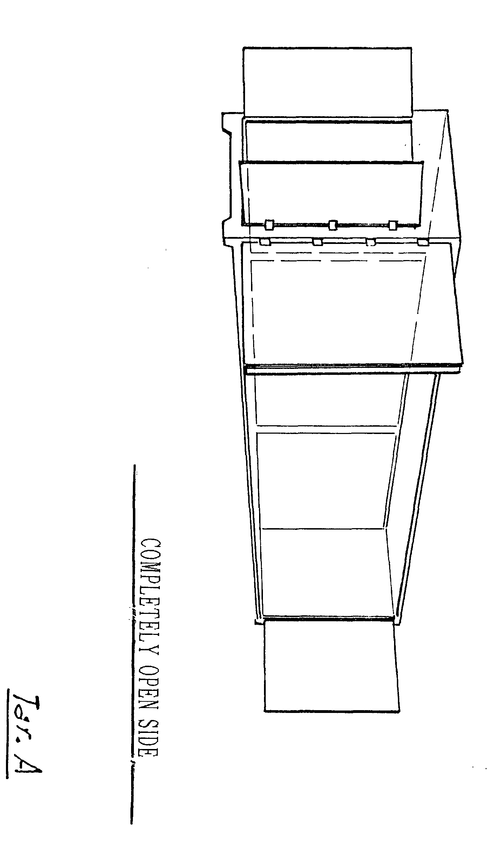

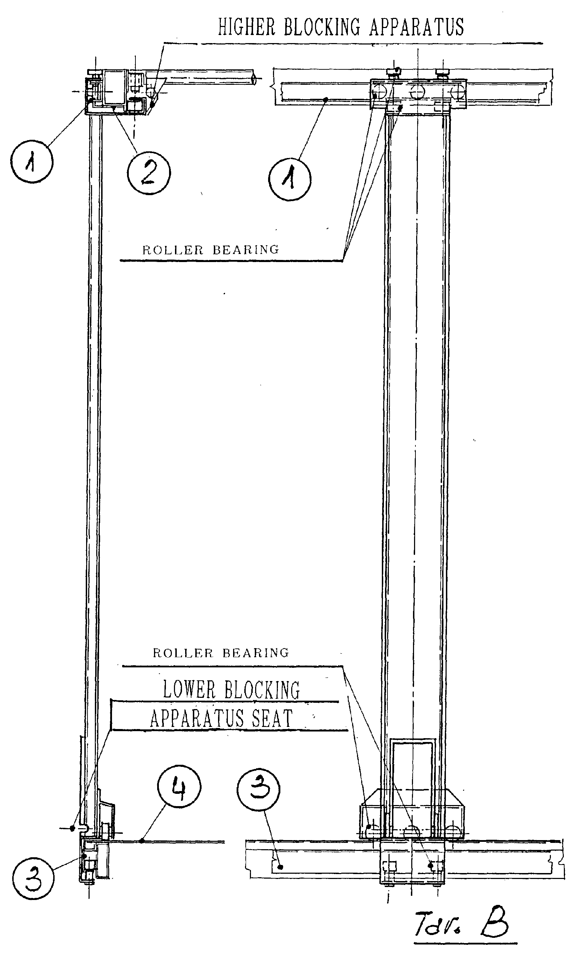

The necessity to provide some vans or containers, stationary or mobile and of a considerable length, openings for loading and unloading of large width and usefulness without obstructions, has forced us to realise a device which permits us to obtain the following targets :
1)- the total opening, easy and quick of the sides to allow the loading and unloading of largest commercial pallets moved by fork-lift trucks ( fig. 1);
2)- the creation of one or more reinforced fulcrums, placed in the most convenient area of the side, in the close position, capable to hold the pressure against the sides caused by loose goods, especially when caused by the centrifugal force due to the manoeuvre on a bent.

TARGET 1 - On the side we provide an opening that can get to notable dimensions in high as well as in length. In the opening we provide doors divided in two groups of modular shutters comprehensive of at least one steering column; one group can be steered toward the back side, the other towards the front side. Each group is formed by two or more shutters, according to the length of the side and of two or more sliding steering columns. The shutters are jointed together and to the steering columns by continue hinges.

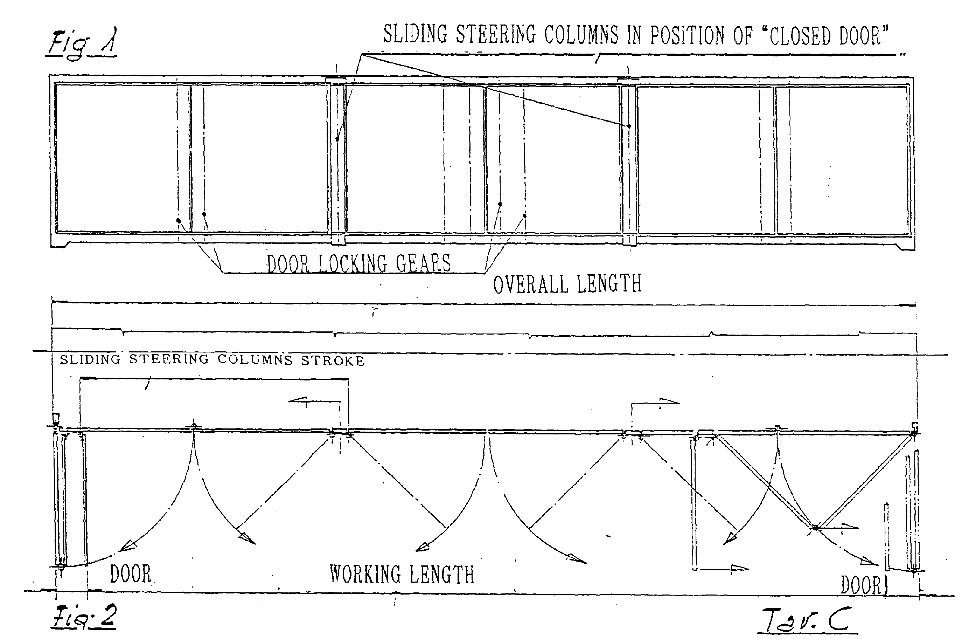

The sustain and the vertical and the vertical set-up of the shutter, during the opening and closing opening, are secured by the steering column in the corner of the side, which is fixed, to which the shutter is jointed and by the in between steering column ( columns) sliding on very resistant runners (tav.B fig. 1-2-3-4) jointed to shutters with hinges as well. The various parts are, on their turn, conveniently jointed together in order to allow the packing towards one extremity or the other of the opening ( tav.C fig. 1-2).

The rigor of their structure constitutes a guaranty for the maintenance of the parallelism and of the geometric symmetry of the system during the movement;

TARGET 2 - The choice of the number of shutters and, subsequently of the number of sliding steering columns depends on :
1)- The length of the sides ;
2)- The horizontal length of the shutters, which, in the opening must be compatible with the dimensions of the place where the pallets are loaded and unloaded.

The position of the sliding steering columns is obtained trough a convenient distribution in the space of the opening of the side, in order to ensure an equal distribution of the strength for all of them in the position of " closed side". In this position the sliding steering columns are jointed to the fixed structures of the containers by automatic blockages ( on the top ) and manual ones ( on the bottom ) to give, together with door locking gears (tav.C fig. 1), solid stability and resistance to pushes and twists It could happen that, during the stroke, the system has to overcome bottom side rails deformed by the cambers caused by the load; the spcial design of the runners of the sliding steering columns and the orientation of runner bearing axes (tav.B) are such to be able to ignore the effects of it.

## Claims

1. The main target of this claims is the manufacturing and the application of such sliding device ( steering columns ) which allows (tav. A-C )the sustain and the symmetry of the door modular system also in the opening and closing movement and insures the consolidation of the closed side, also during the journey.

2. We claim the special structure of the steering column in its essential parts ( tav.B).

3. We claim the choice of the system for the usefulness achieved during the loading and unloading operation of indivisible goods of large dimension (tav. C fig.2).
